# EUROPEAN PATENT APPLICATION

(11) **EP 3 740 001 A1**
(43) Date of publication of application: **18.11.2020**
(21) Application number: 19737968.8
(22) Date of filing: 07.01.2019
(51) Int. Cl.: H04W 72/04, H04W 4/00, H04W 28/16, H04W 92/20

(54) **BASE STATION DEVICE**

(30) Priority: 11.01.2018 JP 2018003005
(71) Applicant: NTT DOCOMO, INC., Chiyoda-ku Tokyo 100-6150 (JP)
(72) Inventor: TOEDA, Teruaki, Tokyo 100-6150 (JP); UMESH, Anil, Tokyo 100-6150 (JP); HANAKI, Akihito, Tokyo 100-6150 (JP)
(74) Representative: Hoffmann Eitle
(86) International application number: PCT/JP2019/000099
(87) International publication number: WO 2019/138974

(57) **Abstract**

A base station apparatus is a second base station apparatus for communicating with a first base station apparatus, the second base station apparatus including a receiving unit that receives, from the first base station apparatus, resource coordination information used to allocate a radio resource; a control unit that allocates a radio resource based on the resource coordination information; and a transmitting unit that transmits resource coordination information to the first base station apparatus, wherein the resource coordination information includes information indicative of at least one of a frequency domain and a time domain indicating a location of the radio resource.

## Description

### TECHNICAL FIELD

The present invention relates to a base station apparatus in a radio communication system.

### BACKGROUND ART

Currently, the 3GPP (Third Generation Partnership Project) is developing specifications for a new radio communication system called a New Radio Access Technology (NR) system as a successor to the LTE (Long Term Evaluation) system and the LTE-Advanced system (e.g., Non-Patent Document 1).

Similar to dual connectivity in the LTE system, it has been studied, in the NR system, to introduce technology called LTE-NR dual connectivity or multi-RAT (Multi Radio Access Technology) dual connectivity in which data is divided between a base station apparatus (eNB) of the LTE system and a base station apparatus (gNB) of the NR system, and data is simultaneously transmitted and received by these base station apparatuses (e.g., Non-Patent Document 2) .

### Prior Art Document

### [Non-Patent Document]

Non-Patent Document 1: 3GPP TS 38.300 V1.2.1 (2017-11)
Non-Patent Document 2: 3GPP TS 37.340 V1.2.0 (2017-10)

### SUMMARY OF THE INVENTION

### [PROBLEM TO BE SOLVED BY THE INVENTION]

In LTE-NR dual connectivity, inter-modulation distortion (IMD) and harmonics can occur in two or more uplink transmissions. In this case, the generated IMD and harmonics may fall into the downlink reception band of an LTE component carrier or NR component carrier in the user equipment (UE: User Equipment), thereby creating a risk of causing interference (in-device interference) within the user equipment. In particular, NR systems are likely to be susceptible to IMD because they generally utilize broader bandwidth than LTEs.

Furthermore, not only in the dual connectivity between the LTE system and the NR system, but also in the dual connectivity between a plurality of radio communication system to which respective different RATs are applied, IMD, harmonics, etc., caused by two or more uplink transmissions may fall into a reception band, and in-device interference may occur.

In view of the above-described problem, an object of the present invention is to provide a technology for performing communications that reduces the impact of in-device interference in dual connectivity implemented in a radio communication system.

### [MEANS FOR SOLVING THE PROBLEM]

According to the disclosed technology, there is provided a second base station apparatus for communicating with a first base station apparatus, the second base station apparatus including a receiving unit that receives, from the first base station apparatus, resource coordination information used to allocate a radio resource; a control unit that allocates a radio resource based on the resource coordination information; and a transmitting unit that transmits resource coordination information to the first base station apparatus, wherein the resource coordination information includes information indicative of at least one of a frequency domain and a time domain indicating a location of the radio resource.

### [ADVANTAGE OF THE INVENTION]

According to the disclosed technology, communication can be performed to reduce the effect of in-device interference in dual connectivity performed in a radio communication system.

### BRIEF DESCRIPTION OF DRAWINGS

FIG. 1 is an example of a configuration of a radio communication system according to an embodiment of the present invention.
FIG. 2 is a diagram illustrating inter-modulation distortion (IMD) in LTE-NR dual connectivity.
FIG. 3 is a diagram illustrating an example (1) of an arrangement of radio resources in an LTE-NR dual connectivity according to an embodiment of the present invention.
FIG. 4 is a diagram illustrating an example (2) of the arrangement of radio resources in an LTE-NR dual connectivity according to an embodiment of the present invention.
FIG. 5 is a diagram illustrating an example (1) of a sequence at a master node and a secondary node according to an embodiment of the present invention.
FIG. 6 is a diagram illustrating an example (1) of a message signaled between a master node and a secondary node according to an embodiment of the present invention.
FIG. 7 is a diagram illustrating an example (2) of a sequence at a master node and a secondary node according to an embodiment of the present invention.
FIG. 8 is a diagram illustrating an example (2) of a message signalled between a master node and a secondary node according to an embodiment of the present invention.
FIG. 9 is a diagram illustrating an example (3) of a sequence at a master node and a secondary node according to an embodiment of the present invention.
FIG. 10 is a diagram illustrating an example (3) of a message signalled between a master node and a secondary node according to an embodiment of the present invention.
FIG. 11 is a diagram illustrating details (1) of a message signalled between a master node and a secondary node according to an embodiment of the present invention.
FIG. 12 is a diagram illustrating details (2) of a message signalled between a master node and a secondary node according to an embodiment of the present invention.
FIG. 13 is a diagram illustrating details of a message signalled to a secondary node by a master node according to an embodiment of the present invention.
FIG. 14 is a diagram illustrating an example (4) of a message signalled between a master node and a secondary node according to an embodiment of the present invention.
FIG. 15 is a diagram illustrating details of messages signalled to the master node from a secondary node according to an embodiment of the present invention.
FIG. 16 is a diagram illustrating details (3) of a message signalled between a master node and a secondary node according to an embodiment of the present invention.
FIG. 17 is a diagram illustrating an example (3) of the arrangement of radio resources in LTE-NR dual connectivity according to an embodiment of the present invention.
FIG. 18 is a diagram illustrating an example of a functional configuration of a base station apparatus 100 according to an embodiment of the present invention.
FIG. 19 is a diagram illustrating an example of a hardware configuration of a base station 100 according to an embodiment of the present invention.

### [EMBODIMENTS OF THE INVENTION]

In the following, embodiments of the present invention are described with reference to the drawings.

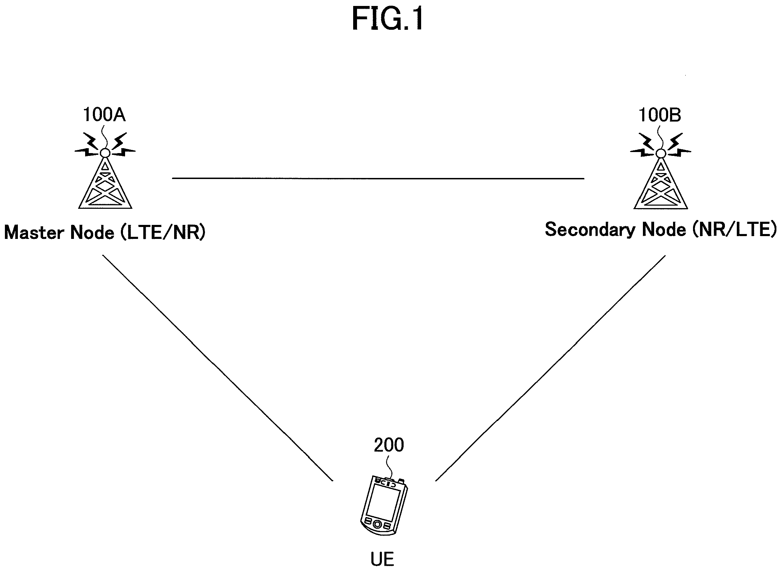

FIG. 1 is an example of a configuration of a radio communication system according to an embodiment of the present invention. FIG. 1 is a schematic diagram illustrating a radio communication system according to an embodiment of the present invention.

As illustrated in FIG. 1, a user equipment 200 communicates with a base station apparatus 100A and a base station apparatus 100B provided by the LTE system or the NR system (hereinafter referred to as a "base station apparatus 100" when the base station apparatus 100A and the base station apparatus 100B are not distinguished). The user equipment 200 supports LTE-NR dual connectivity in which the base station apparatus 100A serves as the master node eNB, and the base station apparatus 100B serves as the secondary node gNB. That is, the user equipment 200 can simultaneously utilize multiple component carriers provided by both the base station apparatus 100A serving as a master node eNB and the base station apparatus 100B serving as a secondary node gNB, thereby performing simultaneous transmission or simultaneous reception with both the base station apparatus 100A serving as a master node eNB and the base station apparatus 100B serving as a secondary node gNB. The master node and the secondary node illustrated in FIG. 1 can communicate with each other, for example, via an X2 interface which is an inter-base-station interface. In the illustrated embodiment, each of the LTE system and the NR system has only one base station. In general, a number of base station apparatuses 100 are disposed to cover the service areas of the LTE system and NR system.

While the following examples are described with respect to LTE-NR dual connectivity, it will be readily appreciated by those skilled in the art that the base station apparatus 100 and the user equipment 200 in accordance with the present disclosure are not limited thereto, and are applicable to dual connectivity between multiple radio communication systems utilizing different RATs, i.e., multi-RAT dual connectivity. The base station apparatus 100 and the user equipment 200 in accordance with the present disclosure may also be applied, for example, to NR-NR dual connectivity and to LTE-LTE dual connectivity.

### (Embodiment 1)

In the following, embodiment 1 is described.

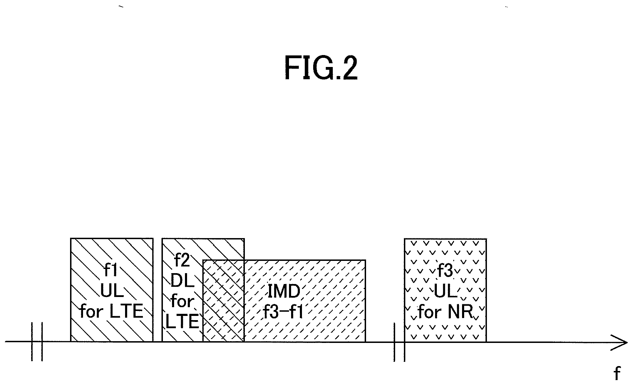

FIG. 2 is a diagram illustrating inter-modulation distortion (IMD) in LTE-NR dual connectivity. The following example discloses a base station apparatus 100 and user equipment 200 that support dual connectivity between multiple radio communication systems utilizing different RATs, i.e., multi-RAT dual connectivity. Furthermore, in the embodiments described below, in-device interference caused by inter-modulation distortion (IMD), harmonics, etc., in the dual connectivity (LTE-NR dual connectivity) between the LTE system and the NR system is described. In LTE-NR dual connectivity, in-device interference as shown in FIG. 2 may typically occur.

In FIG. 1, the LTE duplex method assumes FDD and the NR duplex method assumes TDD. The user equipment 200 that communicates through LTE-NR dual connectivity may experience IMD when UL is transmitted simultaneously in two bands. The user equipment 200 performs simultaneous transmissions in an LTE band that has an UL frequency f1 and an NR band that has an UL frequency f3, which results in the IMD occurring in a band whose frequency is f3-f1. The band that has frequency f3-f1 at which the IMD occurs overlaps an LTE band that has a DL frequency f2, thereby causing in-device interference in the DL of the LTE.

In order to maximize the efficiency of the use of radio resources, the operation of single TX without simultaneous UL transmission in dual connectivity should be avoided. In LTE-NR dual connectivity, the master node eNB and the secondary node gNB can coordinate to avoid single TX operation.

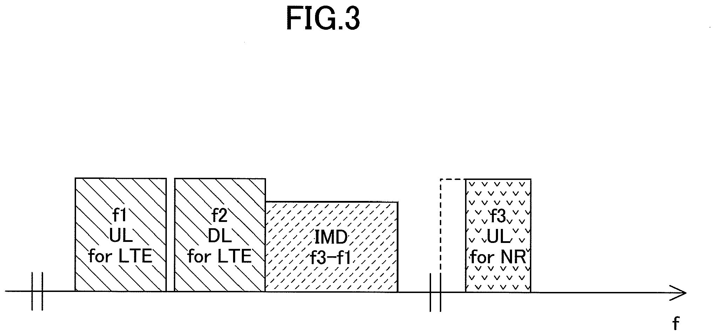

FIG. 3 is a diagram illustrating an example (1) of the arrangement of radio resources in the LTE-NR dual connectivity according to an embodiment of the present invention. In FIG. 3, a method of suppressing IMD is described by limiting the allocation of radio resources in the frequency range.

As shown in FIG. 3, in the NR band that has the UL frequency f3, decreasing the band allocated in the frequency domain causes the band in frequency f3-f1 of the generated IMD to decrease in the frequency domain, and thereby the band of the generated IMD is prevented from overlapping the LTE band that has the DL frequency f2. That is, IMD can be suppressed by limiting the allocation of radio resources in the frequency range.

In order to limit the allocation of radio resources in the frequency domain as described above, the following information is required to be shared between the master node eNB and the secondary node gNB.
1) PRB (Physical Resource Block) that may be used for DL/UL
2) ARFCN (Absolute radio-frequency channel number)
3) Carrier bandwidth
The above information is signalled for each of PCell, PSCell, and SCell.

Namely, in order to limit the location of radio resources in the frequency domain and avoid single TX operation, information about the location of the frequency domain of the radio resource needs to be signalled, e.g., via an X2 interface.

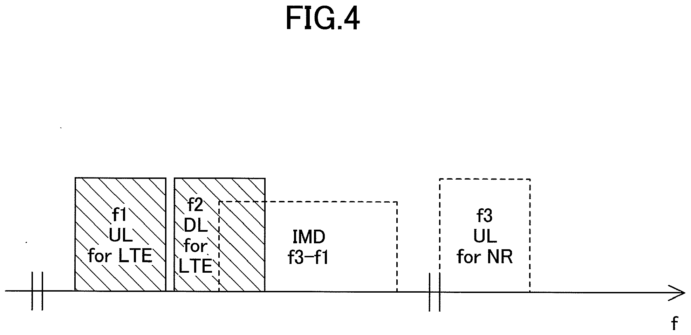

FIG. 4 is a diagram illustrating an example (2) of the arrangement of radio resources in the LTE-NR dual connectivity according to an embodiment of the present invention. In FIG. 4, a method of suppressing IMD by limiting the allocation of radio resources in the time domain is described.

As shown in FIG. 4, the timing of transmitting an NR band that has the UL frequency f3 is not matched with the timing of transmitting an LTE band that has the UL frequency f1. IMD does not occur when only one of LTE UL or NR UL is transmitted. That is, IMD can be suppressed by limiting the allocation of radio resources in the time domain.

In order to limit the allocation of radio resources in the time domain as described above, assumptions of two cases are required. Required information varies between these two cases.

The first case is that the master node eNB and the secondary node gNB are synchronized, or are in possession of a timing difference measured by the user equipment 200, i.e., SSTD (SFN and sub-frame timing difference). In the first case, sub-frames or slots that may be used for DL/UL and a special sub-frame configuration need to be shared by the master node eNB and the secondary node gNB.

The second case is that the master node eNB and the secondary node gNB are asynchronous and are not in possession of the timing difference SSTD. In the second case, the start or stop of interference control is required to be signalled between the master node eNB and the secondary node gNB.

Namely, in order to limit the allocation of radio resources in the time domain and avoid single TX operation, information concerning the allocation of the time domain of the radio resources or the initiation or cessation of interference control is required to be signalled, for example, via the X2 interface.

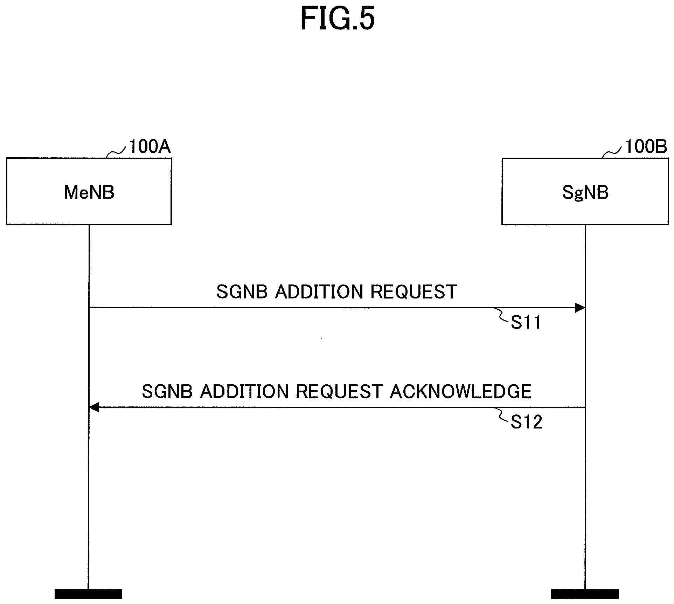

Hereinafter, from FIG. 5 to FIG. 12, an example of the sequences of the base station apparatus 100A serving as a master node eNB and the base station apparatus 100B serving as a secondary node gNB, as well as messages to be signalled, are described. The sequences described below may be performed when adding SgNB, preparing for an SgNB change, starting SgNB connection, etc. The information limiting the allocation of radio resources described below may be information applied from the present time, or it may be information applied upon the arrival of a predetermined time, i.e., at a certain time in the future.

FIG. 5 is a diagram illustrating an example (1) of a sequence at a master node and a secondary node according to an embodiment of the present invention. As shown in FIG. 5, the master node eNB is denoted as MeNB and the secondary node gNB is denoted as SgNB.

In step S11, the base station apparatus 100A that is a MeNB transmits "SGNB ADDITION REQUEST" to the base station apparatus 100B that is SgNB. In a subsequent step S12, the base station apparatus 100B that is SgNB transmits "SGNB ADDITION REQUEST ACKNOWLEDGE" to the base station apparatus 100A that is MeNB.

The "SGNB ADDITION REQUEST" message includes information pertaining to the radio resource allocation of the MeNB, and the SgNB may use such information to optimize the radio resource allocation. The "SGNB ADDITION ACKNOWLEDGE" message includes information about the SgNB's radio resource allocation, and MeNB may use that information to optimize the radio resource allocation. In the sequence of FIG. 5, the reconfiguration procedure of SgNB may be completed.

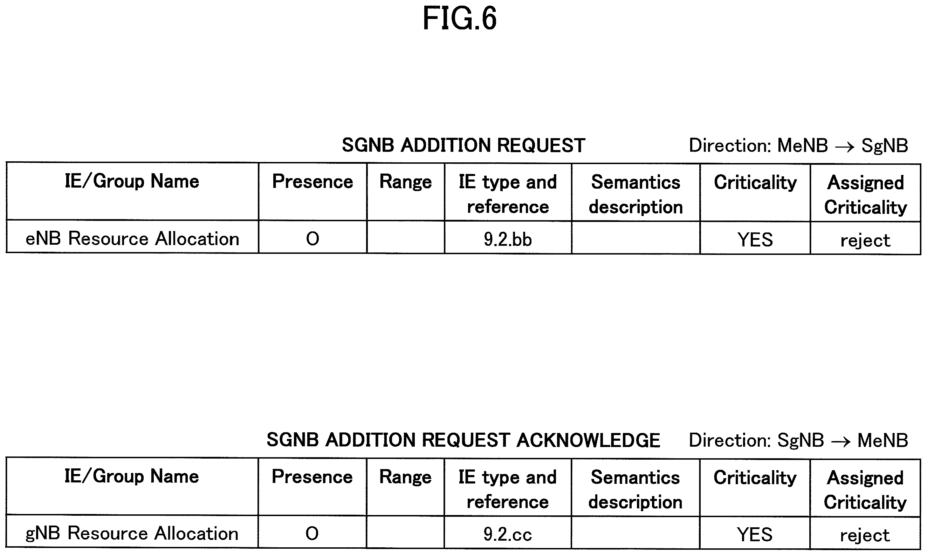

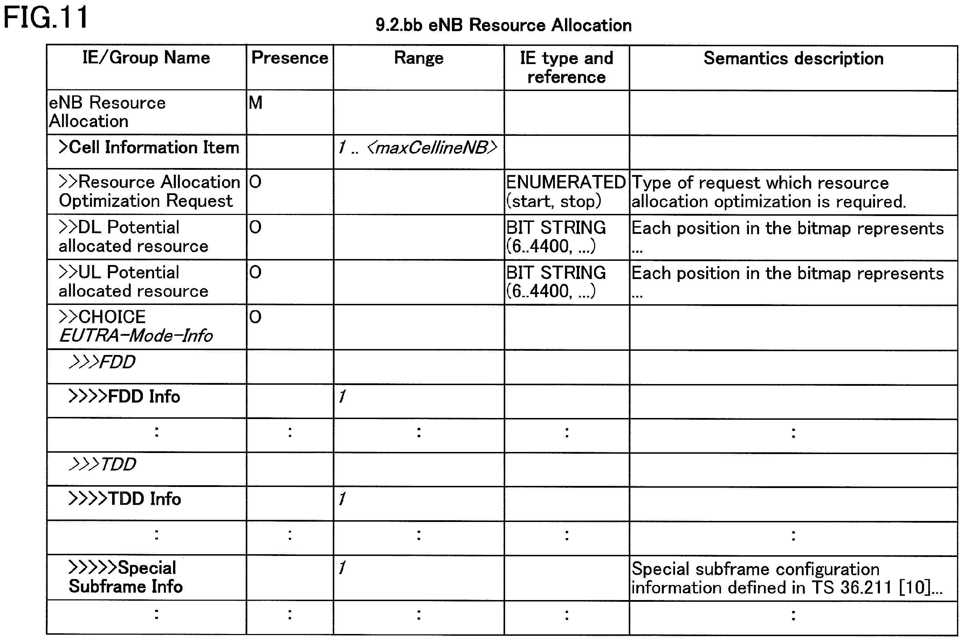

FIG. 6 is a diagram illustrating an example (1) of a message signalled between a master node and a secondary node according to an embodiment of the present invention. As shown in FIG. 6, the "SGNB ADDITION REQUEST" message includes the information element "eNB Resource Allocation". The direction in which the message is signalled is from MeNB to SgNB. Details of the information element "eNB Resource Allocation," "9.2.bb," are described below in FIG. 11.

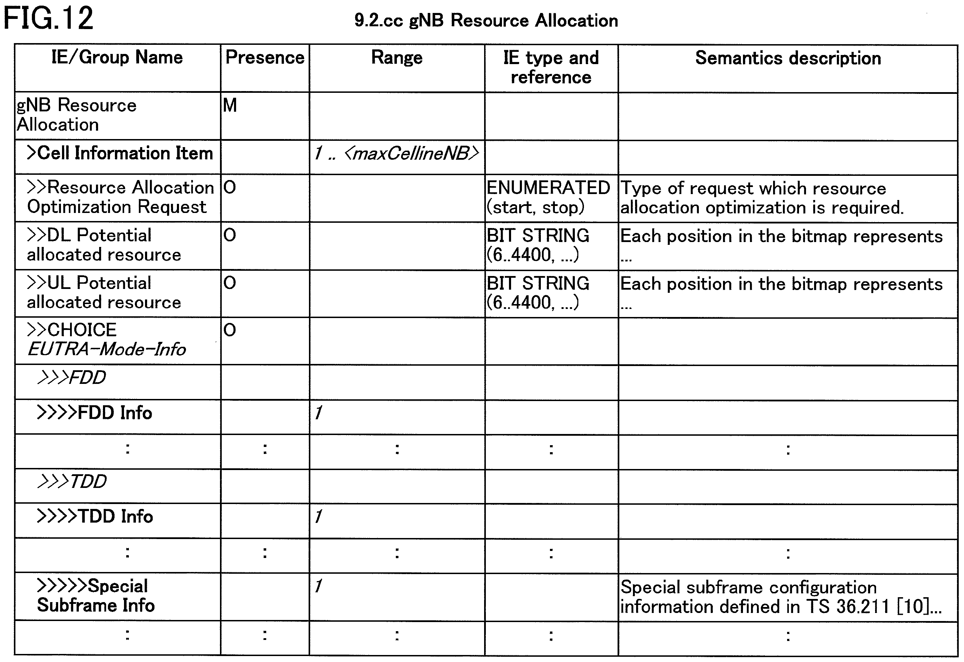

As shown in FIG. 6, the "SGNB ADDITION REQUEST ACKNOWLEDGE" message includes the information element "gNB Resource Allocation". The direction in which the message is signalled is from SgNB to MeNB. Details "9.2.cc" of the Information Element "gNB Resource Allocation" are described below in FIG. 12.

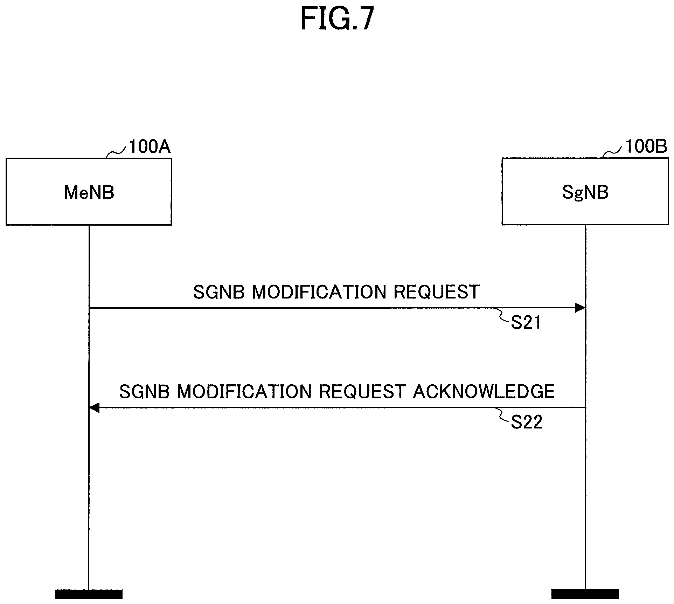

FIG. 7 is a diagram illustrating an example (2) of a sequence at a master node and a secondary node according to an embodiment of the present invention. As shown in FIG. 7, the master node eNB is denoted as MeNB and the secondary node gNB is denoted as SgNB.

In step S21, the base station apparatus 100A that is MeNB transmits "SGNB MODIFICATION REQUEST" to the base station apparatus 100B that is SgNB. In subsequent step S22, the base station apparatus 100B that is SgNB transmits "SGNB MODIFICATION REQUEST ACKNOWLEDGE" to the base station apparatus 100A that is MeNB.

The SGNB MODIFICATION REQUEST message includes information pertaining to the radio resource allocation of the MeNB, and the SgNB may use the information to optimize the radio resource allocation. The SGNB MODIFICATION ACKNOWLEDGE message includes information about the SgNB's radio resource allocation, and MeNB may use that information to optimize the radio resource allocation. In the sequence of FIG. 7, the reconfiguration procedure of SgNB may be completed.

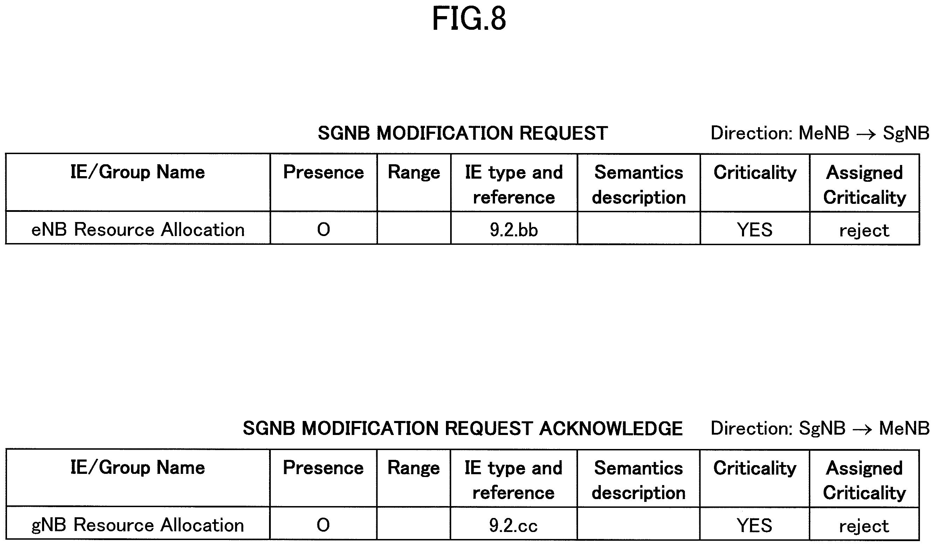

FIG. 8 is a diagram illustrating an example (2) of a message signalled between a master node and a secondary node according to an embodiment of the present invention. As shown in FIG. 8, the "SGNB MODIFICATION REQUEST" message includes the information element "eNB Resource Allocation". The direction in which the message is signalled is the direction from MeNB to SgNB. Details "9.2.bb" of the information element "eNB Resource Allocation" are described below in FIG. 11.

As shown in FIG. 6, the "SGNB MODIFICATION REQUEST ACKNOWLEDGE" message includes the information element "gNB Resource Allocation." The direction in which the message is signalled is from SgNB to MeNB. Details "9.2.cc" of the Information Element "gNB Resource Allocation" are described below in FIG 12.

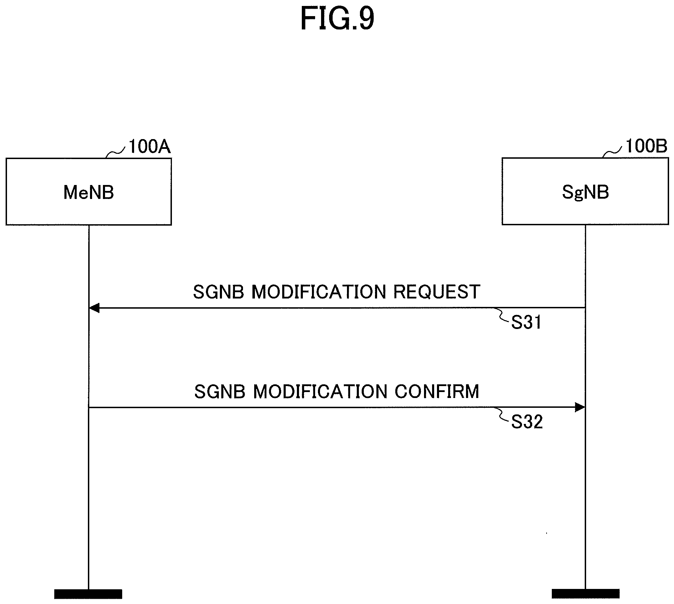

FIG. 9 is a diagram illustrating an example (3) of a sequence at a master node and a secondary node according to an embodiment of the present invention. As shown in FIG. 9, the master node eNB is denoted as MeNB and the secondary node gNB is denoted as SgNB.

In step S31, the base station apparatus 100B that is SgNB transmits "SGNB MODIFICATION REQUIRED" to the base station apparatus 100A that is MeNB. In subsequent step S32, the base station apparatus 100A that is MeNB, transmits "SGNB MODIFICATION CONFIRM" to the base station apparatus 100B that is SgNB.

The "SGNB MODIFICATION REQUIRED" message includes information about the SgNB's radio resource allocation, and MeNB may use that information to optimize the radio resource allocation. The "SGNB MODIFICATION CONFIRM" message includes information pertaining to the radio resource allocation of the MeNB, and the SgNB may use the information to optimize the radio resource allocation. In the sequence of FIG. 9, the Modification Preparation procedure of SgNB may be completed.

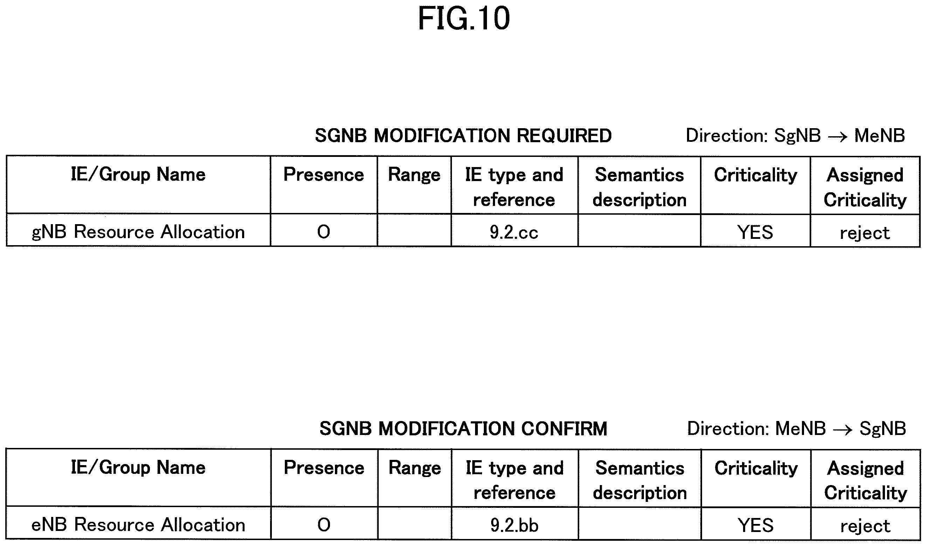

FIG. 10 is a diagram illustrating an example (3) of a message signalled between a master node and a secondary node according to an embodiment of the present invention. As shown in FIG. 10, the "SGNB MODIFICATION REQUIRED" message includes the information element "gNB Resource Allocation". The direction in which the message is signalled is from SgNB to MeNB. Details "9.2.cc" of the Information Element "eNB Resource Allocation" are described below in FIG. 12.

As shown in FIG. 6, the "SGNB MODIFICATION CONFIRM" message includes the information element "eNB Resource Allocation." The direction in which the message is signalled is from MeNB to SgNB. Details "9.2.bb" of the information element "gNB Resource Allocation" are described below in FIG. 11.

FIG. 11 is a diagram illustrating details (1) of a message signalled between a master node and a secondary node according to an embodiment of the present invention. As shown in FIG. 11, "eNB Resource Allocation" includes "Resource Allocation Optimization Request." "Resource Allocation Optimization Request" is information indicating the start or stop of interference control and is used to optimize the allocation of radio resources.

Furthermore, as shown in FIG. 11, "eNB Resource Allocation" includes "DL Potential allocated resource" and "UL Potential allocated resource." "DL Potential allocated resource" and "UL Potential allocated resource" are information indicating the PRB that may be used for DL/UL.

Furthermore, as shown in FIG. 11, "eNB Resource Allocation" includes "FDD Info." "FDD Info" is information indicating the ARFCN and carrier bandwidth.

Furthermore, as shown in FIG. 11, "eNB Resource Allocation" includes "TDD Info." "TDD Info" is information indicating sub-frames or slots that may be used for DL/UL.

Furthermore, as shown in FIG. 11, "eNB Resource Allocation" includes "Special Subframe Info." "Special Subframe Info" is the information that indicates the special subframe configuration.

Although not illustrated in FIG. 11, information about the frequency domain or time domain of unused radio resources may be included in the "eNB Resource Allocation." That is, the base station apparatus 100 may transmit information about the frequency domain or time domain of the radio resource it uses or information about the frequency domain or time domain of the radio resource it does not use to other base station apparatuses 100. The base station apparatus 100 may also transmit, to another base station apparatus, information about the frequency domain or time domain of radio resources that are allowed to be used by the other base station apparatus 100, or information about the frequency domain or time domain of radio resources that are disallowed to be used by the other base station apparatus 100. The base station apparatus 100 may use the information received from the other base station apparatus 100 for allocation of radio resources.

FIG. 12 is a diagram illustrating details (2) of a message signalled between a master node and a secondary node according to an embodiment of the present invention. As shown in FIG. 12, "gNB Resource Allocation" includes "Resource Allocation Optimization Request." "Resource Allocation Optimization Request" is information indicating the start or stop of interference control and is used to optimize the allocation of radio resources.

Furthermore, as shown in FIG. 12, "gNB Resource Allocation" includes "DL Potential allocated resource" and "UL Potential allocated resource." "DL Potential allocated resource" and "UL Potential allocated resource" are information indicating the PRB that may be used for DL/UL.

Furthermore, as shown in FIG. 12, "gNB Resource Allocation" includes "FDD Info". "FDD Info" is information indicating the ARFCN and carrier bandwidth.

Furthermore, as shown in FIG. 12, "gNB Resource Allocation" includes "TDD Info." "TDD Info" is information indicating sub-frames or slots that may be used for DL/UL.

Furthermore, as shown in FIG. 12, "gNB Resource Allocation" includes "Special Subframe Info." "Special Subframe Info" is the information that indicates the special subframe configuration.

Although not illustrated in FIG. 12, information about the frequency domain or time domain of unused radio resources may be included in the "gNB Resource Allocation." The base station apparatus 100 may use the information in the allocation of radio resources. That is, the base station apparatus 100 may transmit, to another base station apparatus 100, information about the frequency domain or time domain of the radio resource it uses or information about the frequency domain or time domain of the radio resource it does not use. The base station apparatus 100 may also transmit, to another base station apparatus 100, information about the frequency domain or time domain of radio resources that are allowed to be used by the other base station 100 or information about the frequency domain or time domain of radio resources that are disallowed to be used by the other base station 100. The base station apparatus 100 may use the information received from the other base station apparatus 100 for the allocation of radio resources.

In the above-described embodiment, the base station apparatus 100A and the base station apparatus 100B can allocate radio resources in which the IMD is suppressed by mutually signalling the position in the frequency domain or the position in the time domain of the radio resource allocation, information indicating the start or stop of the interference control, etc.

That is, communication can be performed to reduce the effect of in-device interference on the dual connectivity performed in the radio communication system.

### (Embodiment 2)

In the following, embodiment 2 is described.

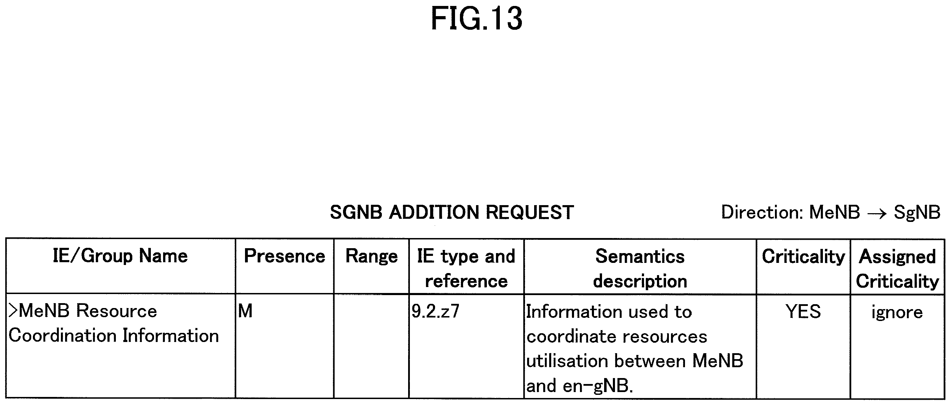

FIG. 13 is a diagram illustrating details of a message signalled to a secondary node by a master node according to an embodiment of the present invention. The master node, MeNB, does not know which cell will be PSCell when adding SgNB. Accordingly, MeNB is unable to calculate resource coordination information assuming a specific PSCell. In contrast, since the impact of IMD on each set of PCell and PSCell varies depending on the frequency arrangement, a plurality of different resource coordination information items may be required. However, only one resource coordination information item has been signalled from the MeNB to the SgNB.

Since multiple cells are assumed to be candidates for PSCell as described above, MeNB may report, to the SgNB, a plurality of resource coordination information items for respective radio resources used in the cells. The plurality of resource coordination information items may be signalled from MeNB to SgNB, for example, as "MeNB Resource Coordination Information" included in "SGNB ADDITION REQUEST" shown in FIG. 13. SgNB may add PSCell based on the signalled plurality of resource coordination information items. The resource coordination information includes information indicating at least one of a frequency domain and a time domain indicating the position of the radio resource.

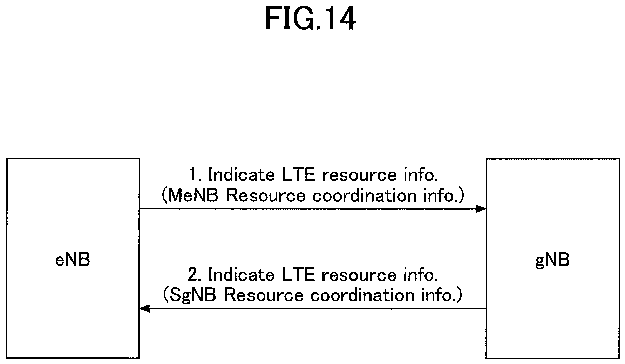

FIG. 14 is a diagram illustrating an example (4) of a message signalled between a master node and a secondary node according to an embodiment of the present invention. As shown in FIG. 14, MeNB may signal, to SgNB, LTE resource information, as "MeNB Resource Coordination Information" included in "SGNB ADDITION REQUEST."

Furthermore, as shown in FIG. 14, SgNB may signal, to MeNB, LTE resource information, as "SgNB Resource Coordination Information" included in "SGNB ADDITION REQUEST ACKNOWLEDGE."

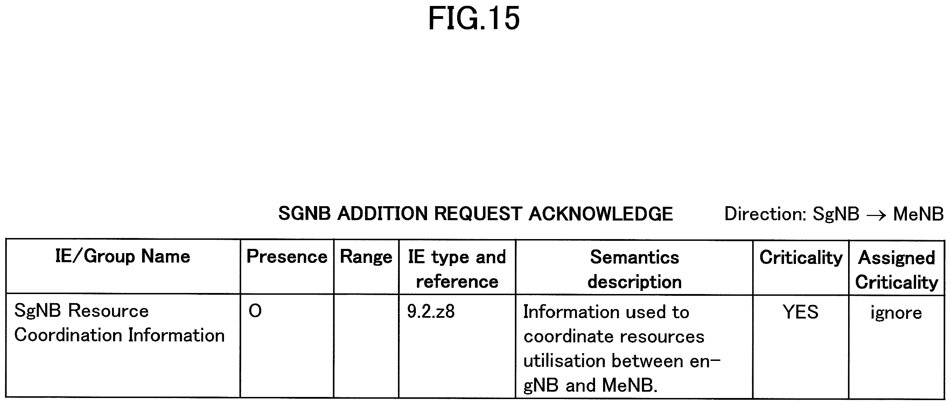

FIG. 15 is a diagram illustrating details of messages signalled to the master node from a secondary node according to an embodiment of the present invention. The resource information of the LTE signalled from SgNB to MeNB shown in FIG. 14 may be transmitted in the "SgNB Resource Coordination Information" included in the message "SGNB ADDITION REQUEST ACKNOWLEDGE" shown in FIG. 15.

Here, since SgNB does not recognize the allocation of resources individually configured in the LTE UE, the LTE resource information signalled from SgNB to MeNB may interfere with the individually used mandatory resources of the LTE. Thus, MeNB may signal, to SgNB, UE-specific resources in the LTE.

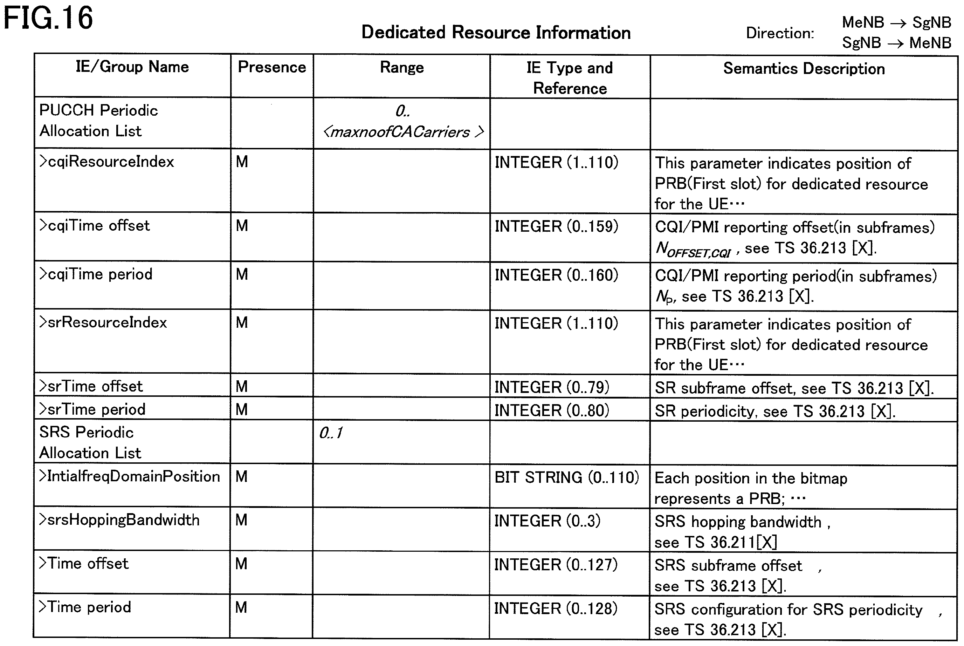

FIG. 16 is a diagram illustrating details (3) of a message signalled between a master node and a secondary node according to an embodiment of the present invention. As illustrated in FIG. 15, MeNB may signal, to SgNB, UE-specific resources in the LTE. The UE-specific resources in the LTE may be signalled from MeNB to SgNB via the message "Dedicated Resource Information" shown in FIG. 16. The message "Dedicated Resource Information" may be signalled from SgNB to MeNB.

The message "Dedicated Resource Information" includes, for example, the information element "PUCCH Periodic Allocation List" indicating the periodic allocation of PUCCH. By the information element illustrated in FIG. 16, resources individually used by the UE can be signalled.

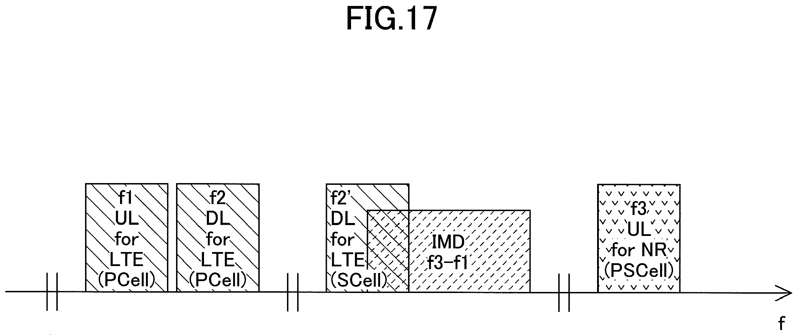

FIG. 17 is a diagram illustrating an example (3) of the allocation of radio resources in the LTE-NR dual connectivity according to an embodiment of the present invention. IMD caused by PCell UL and PSCELL UL influences PCell DL or PSCELL DL. However, IMD caused by PCell UL and PSCell UL may also affect SCell DL. FIG. 17 shows how "IMD f3-f1" caused by PCell UL and PSCell UL influences SCell "f2' DL for LTE."

Thus, the resource coordination information of the SCell DL may be included in the "MeNB Resource Coordination Information" and the resource coordination information may be signalled from MeNB to SgNB, or may be included in the "SgNB Resource Coordination Information" and the resource coordination information may be signalled from the SgNB to MeNB. Based on the signalled SCell DL resource coordination information, MeNB or SgNB allocates radio resources so that the allocated radio resources are not appreciably influenced by IMD.

In the above-described embodiment, by mutually signalling a plurality of resource coordination information items, mandatory resource coordination information individually used by the UE, and resource coordination information pertaining to the resources of the SCell DL, the base station apparatus 100A, which is a MeNB, and the base station apparatus 100B, which is an SgNB, are allowed to allocate radio resources for which IMD is suppressed. Note that the "information limiting the allocation of radio resources" described in embodiment 1 may be included in the "resource coordination information" of embodiment 2.

That is, communication can be performed to reduce the effect of in-device interference in the dual connectivity performed in the radio communication system.

### (Device Configuration)

In the following, a functional configuration example of the base station apparatus 100 that executes the process and operation described above is described. The base station apparatus 100 includes a function to implement at least an embodiment. However, the base station apparatus 100 may include only some of the functions in the embodiments.

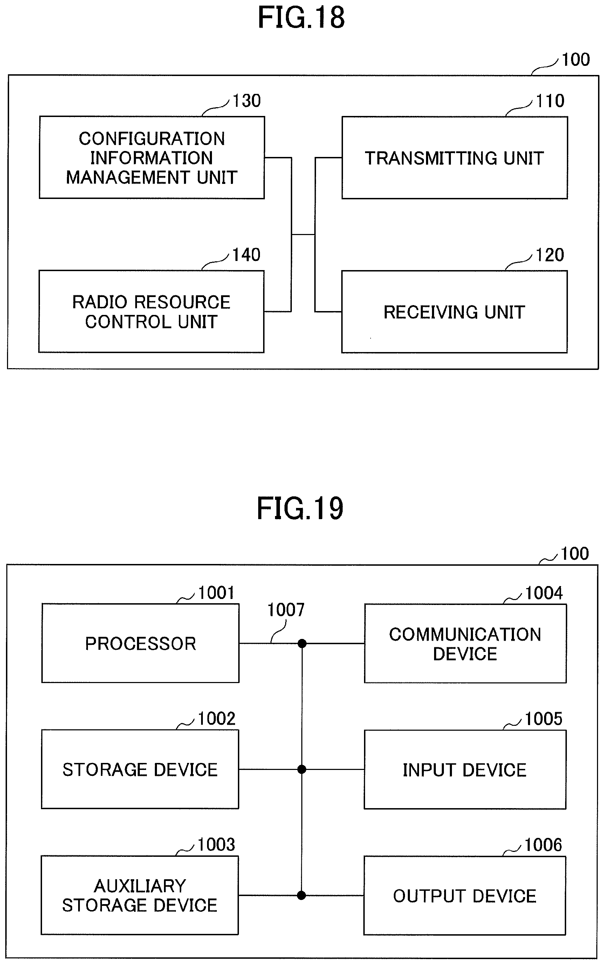

FIG. 18 is a diagram illustrating an example of a functional configuration of the base station apparatus 100. As illustrated in FIG. 18, the base station apparatus 100 includes a transmitting unit 110, a receiving unit 120, a configuration information management unit 130, and a radio resource control unit 140. The functional configuration shown in FIG. 18 is only an example. As long as the operation according to an embodiment of the present invention can be performed, it does not matter what names are used for the functional classifications and functional units.

The transmitting unit 110 includes a function of generating a signal to be transmitted to the user equipment 200 or another base station apparatus 100 and transmitting the signal wirelessly. The receiving unit 120 includes a function for receiving various signals transmitted from the user equipment 200 or another base station apparatus 100 and acquiring information of, for example, a higher layer from the received signal. The transmitting unit 110 has a function of transmitting NR-PSS, NR-SSS, NR-PBCH, DL/UL control signals, etc., to the user equipment 200. The transmitting unit 110 transmits information related to the transmit power control, information related to scheduling, and information related to the configuration of the measurement to the user equipment 200, and the receiving unit 120 receives a message pertaining to a report of the measurement result from the user equipment 200. The transmitting unit 110 transmits a message pertaining to the radio resource allocation to another base station apparatus 100, and the receiving unit 120 receives a message pertaining to the radio resource allocation from another base station apparatus 100.

The configuration information management unit 130 stores the preset configuration information and various configuration information transmitted to the user equipment 200. The content of the configuration information is, for example, information used for configuring the measurement in the user equipment 200, information used for communicating with another base station apparatus 100, etc.

The radio resource control unit 140 performs control over the radio resource allocation including message exchange between the base station apparatuses 100 or between the gNB-CU and the gNB-DU, as described in the embodiment.

The base station apparatus 100A that is eNB, the base station apparatus 100B that is gNB, the base station apparatus 100C that is gNB-CU, and the base station apparatus 100D that is gNB-DU all have some or all of the same functions as the base station apparatus 100 described above.

### (Hardware Configuration)

The functional configuration diagram (FIG. 18) used in the description of the above-described embodiment illustrate the blocks of functional units. These functional blocks (components) are implemented by any combination of hardware and/or software. Additionally, means for implementing each functional block is not particularly limited. Namely, each functional block may be implemented by a single device in which a plurality of elements is physically and/or logically coupled, or each functional block may be implemented by a plurality of devices, while directly and/or indirectly (e.g., wired and/or wireless) connecting two or more devices that are physically and/or logically separated.

For example, the base station apparatus 100 in the embodiments of the present invention may function as a computer that performs processing according to the embodiments of the present invention. FIG. 19 is a diagram illustrating an example of a hardware configuration of a radio communication device, which is the base station apparatus 100 according to the embodiments of the present invention. The above-described base station apparatus 100 may be physically configured as a computer device including a processor 1001; a storage device 1002; an auxiliary storage device 1003; a communication device 1004; an input device 1005; an output device 1006; a bus 1007, etc.

Note that, in the following description, the term "apparatus" can be read as a circuit, a device, a unit, etc. The hardware configuration of the base station apparatus 100 may be configured to include one or more of the respective devices indicated by 1001 through 1006 in the figure, or may be configured not to include a part of the devices.

Each function of the base station apparatus 100 is implemented by loading predetermined software (program) on hardware, such as the processor 1001 and the storage device 1002, so that the processor 1001 performs computation and controls communication by the communication device 1004, and reading and/or writing of data in the storage device 1002 and the auxiliary storage device 1003.

The processor 1001, for example, operates an operating system to control the entire computer. The processor 1001 may be configured with a central processing unit (CPU: Central Processing Unit) including an interface with a peripheral device, a control device, a processing device, a register, etc.

Additionally, the processor 1001 reads a program (program code), a software module or data from the auxiliary storage device 1003 and/or the communication device 1004 to the storage device 1002, and executes various processes according to these. As the program, a program is used which causes a computer to execute at least a part of the operations described in the above-described embodiment. For example, the transmitting unit 110, the receiving unit 120, the configuration information management unit 130, and the radio resource control unit 140 of the base station apparatus 100 illustrated in FIG. 18 may be implemented by a control program stored in the storage device 1002 and executed by the processor 1001. Although it is described that the above-described various processes are executed by a single processor 1001, the above-described various processes may be simultaneously or sequentially executed by two or more processors 1001. The processor 1001 may be implemented by one or more chips. Note that the program may be transmitted from a network via an electric communication line.

The storage device 1002 is a computer readable recording medium, and the storage device 1002 may be formed of at least one of a read-only memory (ROM), an erasable programmable ROM (EPROM), an electrically erasable programmable ROM (EEPROM), a random access memory (RAM), etc. The storage device 1002 may be referred to as a register, a cache, a main memory (main storage device), etc. The storage device 1002 can store programs (program codes), software modules, etc., that can be executed to perform the process according to the embodiments of the present invention.

The auxiliary storage device 1003 is a computer readable recording medium, and, for example, the auxiliary storage device 1003 may be formed of at least one of an optical disk such as a CD-ROM (Compact Disc ROM), a hard disk drive, a flexible disk, a magneto-optical disk (for example, a compact disk, a digital versatile disk, a Blu-ray (registered trademark) disk), a smart card, a flash memory (for example, a card, a stick, a key drive), a floppy (registered trademark) disk, a magnetic strip, etc. The auxiliary storage device 1003 may be referred to as an auxiliary storage device. The above-described storage medium may be, for example, a database including the storage device 1002 and/or the auxiliary storage device 1003, a server, or any other suitable medium.

The communication device 1004 is hardware (transmission/reception device) for performing communication between computers via a wired and/or wireless network, and, for example, the communication device 1004 is also referred to as a network device, a network controller, a network card, a communication module, etc. For example, the transmitting unit 110 and the receiving unit 120 of the base station apparatus 100 may be implemented by the communication device 1004.

The input device 1005 is an input device (e.g., a keyboard, a mouse, a microphone, a switch, a button, a sensor, etc.) for receiving an input from outside. The output device 1006 is an output device (e.g., display, speaker, LED lamp, etc.) that performs output toward outside. Note that the input device 1005 and the output device 1006 may be integrated (for example, a touch panel).

Furthermore, the devices, such as the processor 1001 and the storage device 1002, are connected by a bus 1007 for communicating information. The bus 1007 may be formed of a single bus, or the bus 1007 may be formed of buses that are different among the devices.

Furthermore, the base station apparatus 100 may be configured to include hardware, such as a microprocessor, a digital signal processor (DSP: Digital Signal Processor), an ASIC (Application Specific Integrated Circuit), a PLD (Programmable Logic Device), an FPGA (Field Programmable Gate Array), etc., and a part or all of the functional blocks may be implemented by the hardware. For example, the processor 1001 may be implemented by at least one of these hardware components.

Note that each of the base station apparatus 100A that is the eNB, the base station apparatus 100B that is the gNB, the base station apparatus 100C that is the gNB-CU, and the base station apparatus 100D that is the gNB-DU may include a part of or all a hardware configuration similar to that of the above-described base station apparatus 100.

### (Conclusion of the embodiments)

As described above, according to the embodiments of the present invention, there is provided a second base station apparatus for communicating with a first base station apparatus, the second base station apparatus including a receiving unit that receives, from the first base station apparatus, resource coordination information used to allocate a radio resource; a control unit that allocates a radio resource based on the resource coordination information; and a transmitting unit that transmits resource coordination information to the first base station apparatus, wherein the resource coordination information includes information indicative of at least one of a frequency domain and a time domain indicating a location of the radio resource.

According to the above-described configuration, the base station apparatus 100A, which is a MeNB, and the base station apparatus 100B, which is an SgNB, mutually signal a plurality of resource coordination information items, thereby enabling the allocation of radio resources for which IMD is suppressed. That is, communication can be performed to reduce the effect of in-device interference on the dual connectivity performed in the radio communication system.

The resource coordination information may include resource coordination information for a radio resource used in each of a plurality of base station apparatuses. With this configuration, the base station apparatus 100A, which is a MeNB, and the base station apparatus 100B, which is a SgNB, can allocate radio resources for which IMD is suppressed by mutually signalling a plurality of resource coordination information items, mandatory resource coordination information individually used by the UE, and resource coordination information pertaining to the resources of the SCell DL.

The resource coordination information may include information indicative of a radio resource used on a user equipment-specific basis. The base station apparatus 100A, which is a MeNB, and the base station apparatus 100B, which is a SgNB, can allocate radio resources for which IMD is suppressed by mutually signalling the mandatory resource coordination information individually used by the UE.

The resource coordination information may include information indicative of a radio resource used in a secondary cell of a base station apparatus. The base station apparatus 100A, which is a MeNB, and the base station apparatus 100B, which is a SgNB, can allocate radio resources for which IMD is suppressed by mutually signalling resource coordination information pertaining to the resources of the SCell DL.

As described above, according to the embodiments of the present invention, there is provided a second base station apparatus for communicating with a first base station apparatus, the second base station apparatus including a receiving unit that receives, from the first base station apparatus, information for limiting allocation of a radio resource, a control unit that allocates a radio resource based on the information for limiting the allocation of the radio resource, and a transmitting unit that transmits information for limiting the allocation of a radio resource to the first base station apparatus, wherein the information limiting the allocation of the radio resource includes information indicating at least one of a frequency range and a time range representing the position of the radio resource.

By the above-described configuration, the base station apparatus 100A and the base station apparatus 100B are allowed to allocate a radio resource for which IMD is suppressed by mutually signalling a location in a frequency domain or a location in a time domain of the allocation of the radio resource, information indicating the start or stop of the interference control, etc., through communication via the gNB-CU and the gNB-DU. That is, communication can be performed to reduce the effect of in-device interference on the dual connectivity performed in the radio communication system.

The information limiting the allocation of the radio resource may include information indicative of a frequency domain indicating the location of the radio resource, and information indicative of the frequency domain may include some or all of physical resource blocks, indices indicative of frequencies, and carrier bandwidths that may be used for downlink or uplink by the first base station apparatus or the second base station apparatus. With such a configuration, the base station apparatus 100 may be able to signal the location in the frequency domain of the radio resource allocation.

If the first base station apparatus and the second base station apparatus are synchronized or a timing difference is obtained, the information limiting the allocation of the radio resource may include information indicative of a time domain indicating the location of the radio resource, and the information indicative of the time domain indicating the location of the radio resource may include some or all of configurations of sub-frames, slots, or special sub-frames that may be used for downlink or uplink. With such a configuration, the base station apparatus 100 may signal the location in the time domain of the radio resource allocation.

If the first base station apparatus and the second base station apparatus are asynchronous and the timing difference is not obtained, the information limiting the allocation of the radio resource may include information indicative of a time domain indicating the location of the radio resource, and the information indicative of the time domain indicating the location of the radio resource may include information indicative of whether to initiate interference control. With such a configuration, the base station apparatus 100 may signal the location in the time domain of the radio resource allocation.

The information limiting the allocation of the radio resource may include information indicative of a frequency domain indicating the location of the radio resource and information indicative of a time domain indicating the location of the radio resource. With such a configuration, the base station apparatus 100 may signal the location in the frequency domain and the time domain of the radio resource allocation.

The information limiting the allocation of the radio resource may include information indicative of a frequency domain indicating the location of the unused radio resource or information indicative of a time domain indicating the location of the unused radio resource. With such a configuration, the base station apparatus 100 may signal the location of the unused radio resource allocation.

### (Supplemental embodiments)

The embodiments of the present invention are described above. However, the disclosed invention is not limited to the above-described embodiments, and those skilled in the art would appreciate various modified examples, revised examples, alternative examples, substitution examples, and so forth. In order to facilitate understanding of the invention, specific numerical value examples are used for description. However, the numerical values are merely examples, and any suitable values may be used unless as otherwise specified. The classification of items in the above description is not essential to the present invention. Matter described in two or more items may be combined and used as necessary, and matter described in one item may be applied to matter described in another item (provided that they do not contradict). The boundary between functional units or processing units in a functional block diagram does not necessarily correspond to the boundary between physical components. Operations of a plurality of functional units may be performed physically by one component, or an operation of one functional unit may be physically performed by a plurality of parts. The order of the procedures described in the embodiments may be changed, provided that they do not contradict. For the sake of convenience of processing description, the base station apparatus 100 and the user equipment 200 are described using the functional block diagrams. However, such devices may be implemented by hardware, software, or a combination thereof. Each of software executed by the processor included in the base station apparatus 100 according to the embodiments of the present invention and software executed by the processor included in the user equipment 200 according to the embodiments of the present invention may be stored in a random access memory (RAM), a flash memory, a read only memory (ROM), an EPROM, an EEPROM, a register, a hard disk (HDD), a removable disk, a CD-ROM, a database, a server, or any other appropriate storage medium.

Notification of information is not limited to the aspects/embodiments described in the present specification and may be performed by other methods. For example, notification of information may be performed via physical layer signaling (for example, Downlink Control Information (DCI) or Uplink Control Information (UCI)), higher-layer signaling (for example, RRC (Radio Resource Control) signaling, MAC (Medium Access Control) signaling, broadcast information (Master Information Block (MIB), or System Information Block (SIB)), other signals, or by a combination thereof. Moreover, an RRC message may be referred to as the RRC signaling. Furthermore, the RRC message may be an RRC connection setup (RRC Connection Setup) message, a RRC connection reconfiguration (RRC Connection Reconfiguration) message, etc., for example.

Each aspect/embodiment described in this specification can be applied to long term evolution (LTE), LTE-advanced (LTE-A), SUPER 3G, IMT-Advanced, 4G, 5G, future radio access (FRA), W-CDMA (registered trademark), GSM (registered trademark), CDMA2000, ultra mobile broadband (UMB), IEEE 802.11 (Wi-Fi), IEEE 802.16 (WiMAX), IEEE 802.20, ultra-wideband (UWB), Bluetooth (registered trademark), any other systems using an appropriate system and/or next generation systems extended on the basis of these systems.

In processing procedures, sequences, flowcharts, etc., of each embodiment/modified example described in the specification, the order may be changed provided that there is no contradiction. For example, for the methods described in the specification, the elements of the various steps are presented in an exemplary order and are not limited to a specific order presented.

The specific operations that are described in the specification to be performed by the base station apparatus 100 may be performed by their upper nodes in some cases. In a network formed of one or more network nodes including the base station apparatus 100, it is apparent that the various operations performed for communication with the user equipment 200 may be performed by the base station apparatus 100 and/or a network node other than the base station apparatus 100 (e.g., MME or S-GW can be considered, however, not limited to these). In the above description, a case is exemplified in which there is one network node other than the base station apparatus 100. However, it can be a combination of other network nodes (e.g., MME and S-GW) .

Each aspect/embodiment described in this specification may be used alone, may be used in combination, or may be used while being switched during the execution.

The user equipment 200 may be referred to, by a person ordinarily skilled in the art, as a subscriber station, a mobile unit, a subscriber unit, a wireless unit, a remote unit, a mobile device, a wireless device, a wireless communication device, a remote device, a mobile subscriber stations, an access terminal, a mobile terminal, a wireless terminal, a remote terminal, a handset, a user agent, a mobile client, a client, or it may also be called by some other suitable terms.

The base station apparatus 100 may be referred to, by a person ordinarily skilled in the art, as a NodeB (NB), an enhanced NodeB (eNB), gNB, a base station (Base Station), or any other suitable terms.

The terms "determine (determining)" and "decide (determining)" used in this specification may include various types of operations. For example, "determining" and "deciding" may include deeming that a result of judging, calculating, computing, processing, deriving, investigating, looking up (e.g., search in a table, a database, or another data structure), or ascertaining is determined or decided. Furthermore, "determining" and "deciding" may include deeming that a result of receiving (e.g., reception of information), transmitting (e.g., transmission of information), input, output, or accessing (e.g., accessing data in memory) is determined or decided. Furthermore, "determining" and "deciding" may include deeming that a result of resolving, selecting, choosing, establishing, or comparing is determined or decided. Namely, "determining" and "deciding" may include deeming that some operation is determined or decided.

The expression "based on" used in the present specification does not mean "based on only" unless as otherwise specified explicitly. In other words, the expression "based on" means both "based on only" and "based on at least."

As long as "include," "including," and variations thereof are used in this specification or the claims, the terms are intended to be inclusive in a manner similar to the term "comprising." Furthermore, the term "or" used in the specification or claims is intended not to be an exclusive OR.

In the whole of the present disclosure, for example, if articles are added by translation, such as "a," "an," and "the," these articles may include a plural forms, unless as otherwise indicated explicitly by the context.

Note that, in the embodiments of the present invention, the radio resource control unit 140 is an example of a control unit. The PRB is an example of a physical resource block. The ARFCN is an example of an index indicating a frequency.

The present invention is described in detail above. It is apparent for a person ordinarily skilled in the art that the present invention is not limited to the embodiments described in the present specification. The present invention can be implemented as modified embodiments and altered embodiments without departing from the gist and scope of the present invention defined by the scope of the claims. Accordingly, the descriptions of the present specification are for the purpose of illustration and do not have any restrictive meaning to the present invention.

This international patent application is based on and claims priority to Japanese Patent Application No. 2018-003005 filed on January 11, 2018, and the entire content of Japanese Patent Application No. 2018-003005 is incorporated herein by reference.

### LIST OF REFERENCE SYMBOLS

- 100: base station apparatus
- 200: user equipment
- 110: transmitting unit
- 120: receiving unit
- 130: configuration information management unit
- 140: radio resource controller
- 1001: processor
- 1002: storage device
- 1003: auxiliary storage device
- 1004: communication device
- 1005: input device
- 1006: output device

## Claims

1. A second base station apparatus for communicating with a first base station apparatus, the second base station apparatus comprising:
a receiving unit that receives, from the first base station apparatus, resource coordination information used to allocate a radio resource;
a control unit that allocates a radio resource based on the resource coordination information; and
a transmitting unit that transmits resource coordination information to the first base station apparatus,
wherein the resource coordination information includes information indicative of at least one of a frequency domain and a time domain indicating a location of the radio resource.

2. The base station apparatus according to claim 1, wherein the resource coordination information includes resource coordination information for a radio resource used in each of a plurality of base station apparatuses.

3. The base station apparatus according to claim 1, wherein the resource coordination information includes information indicative of a radio resource used on a user equipment-specific basis.

4. The base station apparatus according to claim 1, wherein the resource coordination information includes information indicative of a radio resource used in a secondary cell of a base station apparatus.
